# EUROPEAN PATENT APPLICATION

(11) **EP 4 425 813 A1**
(43) Date of publication of application: **04.09.2024**
(21) Application number: 22894654.7
(22) Date of filing: 07.11.2022
(51) Int. Cl.: H04L 5/00, H04W 16/28

(54) **INITIAL ACCESS METHOD AND APPARATUS**

(30) Priority: 16.11.2021 CN 202111351905
(71) Applicant: Huawei Technologies Co., Ltd., Shenzhen, Guangdong 518129 (CN)
(72) Inventor: LI, Shengyu, Shenzhen, Guangdong 518129 (CN); GUAN, Lei, Shenzhen, Guangdong 518129 (CN); LI, Ruijie, Shenzhen, Guangdong 518129 (CN)
(74) Representative: Körber, Martin Hans
(86) International application number: PCT/CN2022/130267
(87) International publication number: WO 2023/088117

(57) **Abstract**

An initial access method and an apparatus are provided. In the method, an RS set corresponding to an SSB is introduced. The SSB is sent by using a wideband and a wide beam, and an RS in the RS set occupies a small quantity of time domain resources through frequency division multiplexing and is sent by using a narrow beam. A transmit beam of the RS in the RS set is a refinement of a transmit beam of the SSB. Narrow beam training is completed by using the RS set, to find an optimal narrow beam pointing to a UE, so that in the method, time domain resource overheads of the SSB can be effectively reduced while communication efficiency is ensured.

## Description

This application claims priority to Chinese Patent Application No. 202111351905.X, filed with the China National Intellectual Property Administration on November 16, 2021 and entitled "INITIAL ACCESS METHOD AND APPARATUS", which is incorporated herein by reference in its entirety.

### TECHNICAL FIELD

Embodiments of this application relate to the field of wireless communication, and in particular, to an initial access method and an apparatus.

### BACKGROUND

In a cellular communication system, even if a cell does not establish a wireless connection with any user equipment (user equipment, UE) and does not need to perform data transmission, a base station that manages the cell still needs to send some public signals. These public signals are mainly used by a UE to perform cell search, initial access, and mobility-related measurement. In a new radio (new radio, NR) system of a 5^{th} generation (5^{th} generation, 5G) mobile communication system, these public signals include a primary synchronization signal (primary synchronization signal, PSS), a secondary synchronization signal (secondary synchronization signal, SSS), a physical broadcast channel (physical broadcast channel, PBCH), a multicast channel carrying system information (system information, SI), and a multicast channel carrying a paging message. The PSS, the SSS, and the PBCH are collectively referred to as a synchronization signal and PBCH block (synchronization signal and PBCH block, SSB). The SSB is periodically sent and needs to be subject to beam sweeping, so that all UEs in the cell can receive the SSB. Similarly, the multicast channel carrying the SI and the multicast channel carrying the paging message also need to be periodically sent and need to be subject to beam sweeping. These downlink public signals account for a large proportion in time domain. For example, in a scenario in which network deployment is performed on a millimeter wave band in a frequency range 2 (frequency range 2, FR2), a corresponding frequency range is 24250 MHz to 52600 MHz, a quantity of SSB beams is up to 64, and a symbol proportion is up to 15%. Due to these limitations, time-domain muting and hibernation with a higher proportion cannot be performed for a transmit link of the base station. Consequently, the base station consumes a large amount of energy even when the base station is in no load.

### SUMMARY

Embodiments of this application provide an initial access method and a communication apparatus, to reduce time domain resource overheads of an SSB.

According to a first aspect, an embodiment of this application provides an initial access method. The method includes: A base station sends a first common channel (which may also be referred to as an SSB) to a UE, where the first common channel includes a synchronization signal and a physical broadcast channel, the synchronization signal may carry a physical cell identifier, and the physical broadcast channel may carry a part of minimum system information MSI (which may also be referred to as a MIB) of a cell, and the part of MSI indicates a transmission configuration of remaining minimum system information RMSI (which may also be referred to as SIB 1) of the cell. The UE performs detection on the first common channel. The UE determines, based on the detected first common channel, a first reference signal RS set corresponding to the first common channel, where the first RS set includes at least two RSs. The base station sends the first RS set corresponding to the first common channel. The UE measures the first RS set to determine a target RS in the first RS set. The base station sends a second common channel carrying the RMSI. The UE receives, based on the target RS, the second common channel.

In the foregoing method, after the SSB is detected, the first RS set corresponding to the SSB is introduced, and beam training is performed by using the RS in the first RS set. A transmit beam of the RS may be narrower than a transmit beam of the SSB, so that when the SSB is sent by using a wideband and a wide beam, the beam training is performed without a need of using the SSB. This reduces time domain resource overheads of the SSB.

In a possible implementation, first indication information in the first common channel indicates the first RS set. In the implementation, the first RS set can be flexibly defined.

In a possible implementation, a space domain filtering parameter used by the UE for measuring the reference signal in the first reference signal set is the same as a space domain filtering parameter used for receiving the first common channel.

In a possible implementation, a transmit beam of the RS in the first RS set is a refinement of a transmit beam of the first common channel; or transmit beams of all RSs in the first RS set fall within a range of a transmit beam of the first common channel; or a transmit beam of a part of RSs in the first RS set falls within a range of a transmit beam of the first common channel, and a transmit beam of a part of the RSs is out of the range of the transmit beam of the first common channel. In the implementation, high-resolution beam training can be completed by using a narrow RS transmit beam, to provide an accurate space domain filtering parameter for subsequent communication and improve communication efficiency.

In a possible implementation, each RS in the first RS set occupies only one symbol in time domain; and/or different RSs in the first RS set occupy a same time domain symbol but different frequency domain positions. In the implementation, high-resolution beam training can be completed by using the RS in the first RS set that occupies a small quantity of time domain resources in a frequency division multiplexing manner, so that energy consumption of the UE and the base station can be reduced.

In a possible implementation, a time-frequency position of the RS in the first RS set is determined based on a time-frequency position of the first common channel. In other words, the time-frequency position of each RS in the first RS set is defined by using a relative offset value relative to the time-frequency position of the first common channel, and the offset value may be predefined in a protocol, or may be indicated by using the SSB. When the offset value is indicated by using the SSB, the time-frequency position of the RS in the first RS set can be flexibly indicated, and signaling overheads can be reduced.

In a possible implementation, the time-frequency position of the RS in the first RS set is indicated by the first common channel. In the implementation, a related parameter of the RS in the first RS set can be flexibly defined, to improve system flexibility.

In a possible implementation, the target RS is an RS whose received signal quality is the best in the first RS set, or the target RS is the first RS whose received signal quality is greater than or equal to a preset RS received quality threshold in the first RS set, or the target RS is any RS whose received signal quality is greater than or equal to a preset RS received quality threshold in the first RS set.

In a possible implementation, the first common channel corresponds to one set of second common channels, and the set of second common channels includes at least two second common channels.

In a possible implementation, the target RS corresponds to one target second common channel, the target second common channel is a second common channel in the set of second common channels, and a beam used by the base station for sending the target second common channel is the same as a beam used for sending the target RS, and a space domain filtering parameter used by the UE for receiving the second common channel is the same as a space domain filtering parameter used for receiving the target RS. In the implementation, the base station can send the second common channel by using an optimal transmit beam, and the UE can receive the target second common channel by using an optimal space domain filtering parameter. This can improve transmission performance of the target second common channel.

In a possible implementation, the first common channel corresponds to one set of third common channels, and the set of third common channels includes at least two third common channels.

In a possible implementation, the target RS corresponds to one target third common channel, the target third common channel is a third common channel in the set of third common channels, and a beam used by the base station for sending the target third common channel is the same as a beam used for sending the target RS, and a space domain filtering parameter used by the UE for receiving the target third common channel is the same as a space domain filtering parameter used for receiving the target RS. In the implementation, the base station can send the third common channel by using an optimal transmit beam, and the UE can receive the target third common channel by using an optimal space domain filtering parameter. This can improve transmission performance of the third common channel.

In a possible implementation, the first common channel corresponds to one random access channel set, and the random access channel set includes at least two random access channels.

In a possible implementation, the target RS corresponds to one target random access channel, the target random access channel is a random access channel in the random access channel set, a beam used by the base station for receiving the target random access channel is the same as a beam used for sending the target RS, and a space domain filtering parameter used by the UE for sending the target random access channel is the same as a space domain filtering parameter used for receiving the target RS. In the implementation, the base station can receive the target random access channel by using an optimal receive beam, and the UE can send the target random access channel by using an optimal space domain filtering parameter. This can increase a probability of detecting the random access channel by the base station. In addition, after the first common channel uses the wide beam, one first common channel corresponds to a plurality of random access resources. In this case, each UE uses only a random access resource corresponding to the target RS existed after beam training. This reduces occupation of the random access resource by the UE, and therefore can reduce a random access congestion probability.

According to a second aspect, an embodiment of this application provides an initial access method. The method includes: A base station sends a first common channel (which may also be referred to as an SSB) to a UE, where the first common channel includes a synchronization signal and a physical broadcast channel, the synchronization signal may carry a physical cell identifier, and the physical broadcast channel may carry a part of minimum system information MSI (which may also be referred to as a MIB) of a cell, and the part of MSI indicates a transmission configuration of remaining minimum system information RMSI (which may also be referred to as SIB 1) of the cell. The base station sends a second common channel carrying the RMSI to the UE. The UE performs detection on the second common channel. The UE determines, based on the detected second common channel, a first RS set corresponding to the second common channel, where the first RS set includes at least two RSs. The base station sends the first RS set corresponding to the second common channel. The UE measures the first RS set to determine a target RS in the first RS set.

In the foregoing method, after SIB 1 is detected, the first RS set corresponding to SIB 1 is introduced, and beam training is performed by using the RS in the first RS set. A transmit beam of the RS may be narrower than a transmit beam of the second common channel carrying SIB1, so that when the SSB and SIB1 are sent by using a wideband and a wide beam, the beam training is performed without a need of using the SSB or SIB1. This reduces time domain resource overheads of the SSB and SIB1.

In a possible implementation, a transmit beam of the RS in the first RS set is a refinement of a transmit beam of the second common channel; or transmit beams of all RSs in the first RS set fall within a range of a transmit beam of the second common channel; or a transmit beam of a part of RSs in the first RS set falls within a range of a transmit beam of the second common channel, and a transmit beam of a part of the RSs is out of the range of the transmit beam of the second common channel. In the implementation, high-resolution beam training can be completed by using a narrow RS transmit beam, to provide an accurate space domain filtering parameter for subsequent communication and improve communication efficiency.

In a possible implementation, each RS in the first RS set occupies only one symbol in time domain; and/or different RSs in the first RS set occupy a same time domain symbol but different frequency domain positions. In the implementation, high-resolution beam training can be completed by using the RS in the first RS set that occupies a small quantity of time domain resources in a frequency division multiplexing manner, so that energy consumption of the UE and the base station can be reduced.

In a possible implementation, a time-frequency position of the RS in the first RS set is indicated by the second common channel. In the implementation, a related parameter of the RS in the first RS set can be flexibly defined, to improve system flexibility.

In a possible implementation, the second common channel corresponds to one set of third common channels, and the set of third common channels includes at least two third common channels.

In a possible implementation, the target RS corresponds to one target third common channel, the target third common channel is a third common channel in the set of third common channels, and a beam used by the base station for sending the target third common channel is the same as a beam used for sending the target RS, and a space domain filtering parameter used by the UE for receiving the target third common channel is the same as a space domain filtering parameter used for receiving the target RS. In the implementation, the base station can send the third common channel by using an optimal transmit beam, and the UE can receive the target third common channel by using an optimal space domain filtering parameter. This can improve transmission performance of the third common channel.

In a possible implementation, the second common channel corresponds to one random access channel set, and the random access channel set includes at least two random access channels.

In a possible implementation, the target RS corresponds to one target random access channel, the target random access channel is a random access channel in the random access channel set, a beam used by the base station for receiving the target random access channel is the same as a beam used for sending the target RS, and a space domain filtering parameter used by the UE for sending the target random access channel is the same as a space domain filtering parameter used for receiving the target RS. In the implementation, the base station can receive the target random access channel by using an optimal receive beam, and the UE can send the target random access channel by using an optimal space domain filtering parameter. This can increase a probability of detecting the random access channel by the base station. In addition, after the first common channel uses the wide beam, one first common channel corresponds to a plurality of random access resources. In this case, each UE uses only a random access resource corresponding to the target RS existed after beam training. This reduces occupation of the random access resource by the UE, and therefore can reduce a random access congestion probability.

According to a third aspect, an embodiment of this application provides an initial access method. The method includes: A base station sends an SS in a first SS set to a UE, where the first SS set includes at least two SSs, and one SS is a combination of a PSS and an SSS. The UE performs detection on the SS in the first SS set to determine a target SS. The base station sends a PBCH corresponding to the first SS set. The UE receives, based on the target SS, a PBCH corresponding to the target SS. The base station sends a second common channel carrying SIB1. The UE receives the second common channel based on the target SS.

In the foregoing method, an SSB is divided into the SS and the PBCH, and beam sweeping is performed on an SS having good coverage performance. This reduces time domain resource overheads of the PBCH.

In a possible implementation, a transmit beam of the SS in the first SS set is a refinement of a transmit beam of the PBCH; or transmit beams of all SSs in the first SS set fall within a range of a transmit beam of the PBCH; or a transmit beam of a part of SSs in the first SS set falls within a range of a transmit beam of the PBCH, and a transmit beam of a part of the SSs is out of the range of the transmit beam of the PBCH. In the implementation, high-resolution beam training can be completed by using a narrow SS transmit beam, to provide an accurate space domain filtering parameter for subsequent communication and improve communication efficiency.

In a possible implementation, different SSs in the first SS set occupy a same time domain symbol but different frequency domain positions. In the implementation, high-resolution beam training can be completed by using the SS in the first SS set that occupies a small quantity of time domain resources in a frequency division multiplexing manner, so that energy consumption of the UE and the base station can be reduced.

In a possible implementation, the UE receives, by using a space domain filtering parameter the same as a space domain filtering parameter used for receiving the target SS, the PBCH, the second common channel carrying SIB1, and a third common channel carrying a paging message. In the implementation, transmission performance of the PBCH, the second common channel, and the third common channel can be improved.

In a possible implementation, the PBCH corresponds to one set of second common channels, and the set of second common channels includes at least two second common channels.

In a possible implementation, the target SS corresponds to one target second common channel, the target second common channel is a second common channel in the set of second common channels, a beam used by the base station for sending the target second common channel is the same as a beam used for sending the target SS, and a space domain filtering parameter used by the UE for receiving the second common channel is the same as a space domain filtering parameter used for receiving the target SS. In the implementation, the base station can send the second common channel by using an optimal transmit beam, and the UE can receive the target second common channel by using an optimal space domain filtering parameter. This can improve transmission performance of the target second common channel.

In a possible implementation, the PBCH corresponds to one set of third common channels, and the set of third common channels includes at least two third common channels.

In a possible implementation, the target SS corresponds to one target third common channel, the target third common channel is a third common channel in the set of third common channels, and a beam used by the base station for sending the target third common channel is the same as a beam used for sending the target SS, and a space domain filtering parameter used by the UE for receiving the target third common channel is the same as a space domain filtering parameter used for receiving the target SS. In the implementation, the base station can send the third common channel by using an optimal transmit beam, and the UE can receive the target third common channel by using an optimal space domain filtering parameter. This can improve transmission performance of the third common channel.

In a possible implementation, the PBCH corresponds to one random access channel set, and the random access channel set includes at least two random access channels.

In a possible implementation, the target SS corresponds to one target random access channel, the target random access channel is a random access channel in the random access channel set, and a beam used by the base station for receiving the target random access channel is the same as a beam used for sending the target SS, and a space domain filtering parameter used by the UE for sending the target random access channel is the same as a space domain filtering parameter used for receiving the target SS. In the implementation, the base station can receive the target random access channel by using an optimal receive beam, and the UE can send the target random access channel by using an optimal space domain filtering parameter. This can increase a probability of detecting the random access channel by the base station. In addition, after the first common channel uses a wide beam, one first common channel corresponds to a plurality of random access resources. In this case, each UE uses only a random access resource corresponding to the target SS existed after beam training. This reduces occupation of the random access resource by the UE, and therefore can reduce a random access congestion probability.

According to a fourth aspect, an embodiment of this application provides a communication apparatus. The apparatus may be a terminal, or may be a chip used in a terminal. The apparatus has a function of the UE in any one of the implementations in any one of the first aspect to the third aspect. The function may be implemented by hardware, or may be implemented by hardware executing corresponding software. The hardware or the software includes one or more modules corresponding to the foregoing function.

According to a fifth aspect, an embodiment of this application provides a communication apparatus. The apparatus may be a network device, or may be a chip used in a network device. The apparatus has a function of the base station in any one of the implementations in any one of the first aspect to the third aspect. The function may be implemented by hardware, or may be implemented by hardware executing corresponding software. The hardware or the software includes one or more modules corresponding to the foregoing function.

According to a sixth aspect, an embodiment of this application provides a communication apparatus, including a processor and a memory. The memory is configured to store computer instructions, and when the apparatus runs, the processor executes the computer instructions stored in the memory, to enable the apparatus to perform the method in any one of the implementations in any one of the first aspect to the third aspect.

According to a seventh aspect, an embodiment of this application provides a communication apparatus, including a processor and an interface circuit. The processor is configured to: communicate with another apparatus through the interface circuit, and perform the method in any one of the implementations in any one of the first aspect to the third aspect. There are one or more processors.

According to an eighth aspect, an embodiment of this application further provides a computer-readable storage medium. The computer-readable storage medium stores instructions, and when the instructions are run on a communication apparatus, the communication apparatus is enabled to perform the method in any one of the implementations in any one of the first aspect to the third aspect.

According to a ninth aspect, an embodiment of this application further provides a computer program product. The computer program product includes a computer program, and when the computer program is run on a communication apparatus, the communication apparatus is enabled to perform the method in any one of the implementations in any one of the first aspect to the third aspect.

According to a tenth aspect, an embodiment of this application further provides a chip system, including a processor, configured to perform the method in any one of the implementations in any one of the first aspect to the third aspect.

### BRIEF DESCRIPTION OF DRAWINGS

FIG. 1 is a schematic of an architecture of a mobile communication system to which embodiments of this application are applied;
FIG. 2 is a schematic of a time-frequency structure of an SSB according to an embodiment of this application;
FIG. 3 is a schematic flowchart of an initial access method according to an embodiment of this application;
FIG. 4 is a schematic of a time-frequency position relationship between an SSB and a B-RS in a B-RS set according to an embodiment of this application;
FIG. 5 is a schematic of a mapping mode of a B-RS in frequency domain according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic of a time-frequency position relationship between a first SS set and a PBCH according to an embodiment of this application;
FIG. 9 is another schematic of a time-frequency position relationship between a first SS set and a PBCH according to an embodiment of this application;
FIG. 10 is a schematic of a communication apparatus according to an embodiment of this application; and
FIG. 11 is a schematic of another communication apparatus according to an embodiment of this application.

### DESCRIPTION OF EMBODIMENTS

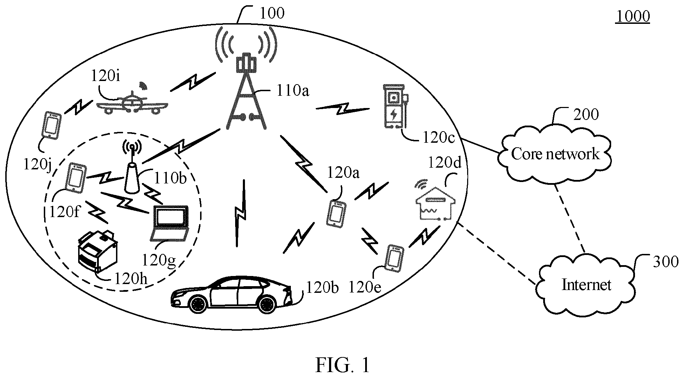

FIG. 1 is a schematic of an architecture of a communication system 1000 to which embodiments of this application are applied. As shown in FIG. 1, the communication system includes a radio access network 100 and a core network 200. Optionally, the communication system 1000 may further include an Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different physical devices that are independent of each other, or a function of the core network device and a logic function of the radio access network device may be integrated into a same physical device, or a part of functions of the core network device and a part of functions of the radio access network device may be integrated into one physical device. The terminals may be connected to each other in a wired or wireless manner, and the radio access network devices may be connected to each other in a wired or wireless manner. FIG. 1 is merely a schematic. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation base station in a 6^{th} generation (6^{th} generation, 6G) mobile communication system, a base station in a future mobile communication system, an access node in a Wi-Fi system, or the like; or may be a module or unit that completes a part of functions of a base station, for example, may be a central unit (central unit, CU), or may be a distributed unit (distributed unit, DU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a media access control (media access control, MAC) layer of the base station, and may further complete a part or all of functions of a physical layer. For specific descriptions of the foregoing protocol layers, refer to related technical specifications of the 3^{rd} generation partnership project (3^{rd} generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form used by the radio access network device are not limited in embodiments of this application. For ease of description, the following uses an example in which the base station is a radio access network device for description.

The terminal may also be referred to as a terminal device, a UE, a mobile station, a mobile terminal, or the like. The terminal may be widely applied to various scenarios, for example, device-to-device (device-to-device, D2D), vehicle to everything (vehicle to everything, V2X) communication, machine type communication (machine type communication, MTC), internet of things (internet of things, IoT), virtual reality, augmented reality, industrial control, autonomous driving, telemedicine, a smart grid, smart furniture, smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form used by the terminal are not limited in embodiments of this application.

The base station and the terminal may be at a fixed position, or may be movable. The base station and the terminal may be deployed on land, including an indoor or outdoor device, a handheld device, or a vehicle-mounted device; or may be deployed on water; or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For the terminal 120j that accesses the radio access network 100 via 120i, the terminal 120i is a base station. However, for the base station 110a, 120i is a terminal, that is, 110a and 120i communicate with each other through a wireless air interface protocol. Certainly, 110a and 120i may alternatively communicate with each other through an interface protocol between base stations. In this case, for 110a, 120i is also a base station. Therefore, both the base station and the terminal may be collectively referred to as communication apparatuses. 110a and 110b in FIG. 1 may be referred to as communication apparatuses having a base station function, and 120a to 120j in FIG. 1 may be referred to as communication apparatuses having a terminal function.

Communication may be performed between a base station and a terminal, between base stations, and between terminals through a licensed spectrum, or may be performed through an unlicensed spectrum, or may be performed through both a licensed spectrum and an unlicensed spectrum. Communication may be performed through a spectrum below 6 gigahertz (gigahertz, GHz), or may be performed through a spectrum higher than 6 GHz, or may be performed through both a spectrum lower than 6 GHz and a spectrum higher than 6 GHz. A spectrum resource used for wireless communication is not limited in embodiments of this application.

In embodiments of this application, a function of the base station may alternatively be performed by a module (for example, a chip) in the base station, or may be performed by a control subsystem having a base station function. The control subsystem having a base station function herein may be a control center in the foregoing application scenarios such as a smart grid, industrial control, intelligent transportation, and a smart city. A function of the terminal may alternatively be performed by a module (for example, a chip or a modem) in the terminal, or may be performed by an apparatus having a terminal function.

In embodiments of this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection with a cell controlled by the base station. A cell that establishes a wireless connection with the terminal is referred to as a serving cell of the terminal. When communicating with the serving cell, the terminal is further interfered by a signal from a neighboring cell.

In embodiments of this application, signal or information transmission may include a sending action of a transmit end and a receiving action of a receive end.

In embodiments of this application, a time domain symbol may be an orthogonal frequency division multiplexing (orthogonal frequency division multiplexing, OFDM) symbol, or may be a discrete fourier transform-spread-OFDM (Discrete Fourier Transform-spread-OFDM, DFT-s-OFDM) symbol. Unless otherwise specified, all symbols in embodiments of this application are time domain symbols.

It may be understood that, in embodiments of this application, a physical downlink shared channel (physical downlink shared channel, PDSCH), a physical downlink control channel (physical downlink control channel, PDCCH), a physical uplink shared channel (physical uplink shared channel, PUSCH), and a PBCH are merely examples of a downlink data channel, a downlink control channel, an uplink data channel, and a broadcast channel at a physical layer respectively, in different systems and different scenarios, these channels may have different names. This is not limited in embodiments of this application. A transmit channel A may also be understood as sending information through the channel A, and a receive channel B may also be understood as receiving information through the channel B.

Before embodiments of this application are introduced, a procedure in which a UE initially accesses a cell in an NR system is first introduced. A process of the UE switching from an idle mode to a connected mode after the UE accesses the cell mainly includes three phases: SSB detection, system information block 1 (system information block 1, SIB1) reception, and random access (random access, RA).

### (1) SSB detection

By detecting an SSB, the UE may obtain an identifier of the cell, complete downlink timing synchronization, and obtain a master information block (master information block, MIB). The MIB includes a configuration parameter of a PDCCH used to schedule SIB1. APSS and an SSS carry a physical cell identifier (physical cell identifier, PCI), and the UE obtains the PCI by detecting the PSS and the SSS. A PBCH of the SSB carries the MIB and an SSB index (index), and each SSB index corresponds to one sending position. The UE completes downlink timing synchronization based on an index of the detected SSB and a detection moment.

The UE can further complete transmit beam training on a base station side by performing detection on the SSB. Because a beam for sending the SSB is wider than a beam used for communication after a radio resource control (radio resource control, RRC) connection is established with the UE, the transmit beam of the SSB may also be referred to as a wide beam. In NR, the SSB is sent based on an SSB pattern (pattern), and the SSB pattern includes at least one SSB. Different SSBs in the SSB pattern respectively correspond to different SSB indexes, and different SSB indexes correspond to different time-frequency positions, that is, may correspond to different time domain positions and a same frequency domain position, or different frequency domain positions and a same time domain position, or different time domain positions and different frequency domain positions. Optionally, different SSB indexes correspond to different space domain filtering parameters sent by a base station end, in other words, correspond to different transmit beams. The SSB index may be carried in the PBCH of the SSB. The UE may select, by performing detection on the SSB, an index of an SSB with a strongest received signal, to complete the transmit beam training on the base station side.

Optionally, the UE may alternatively receive SSBs with a same SSB index in a plurality of SSB patterns by using different receive beams, to determine an optimal receive beam on a UE side, and complete receive beam training on the UE side. Functions of the wide beam of the base station include: (1) The UE receives, at a time-frequency position corresponding to the SSB index, SIB 1 and a paging message (briefly referred to as SIB 1/Paging) that are sent by using a same beam, to improve coverage of SIB 1/Paging. (2) The UE sends a physical random access channel (physical random access channel, PRACH) at a position corresponding to the SSB index, and the base station may receive the physical random access channel by using a same wide beam, to improve a PRACH receiving success probability. (3) After the UE completes initial access and establishes an RRC connection, the base station may perform narrow beam training based on the wide beam, that is, perform training only on a narrow beam within a range of the wide beam, to reduce overheads of the narrow beam training.

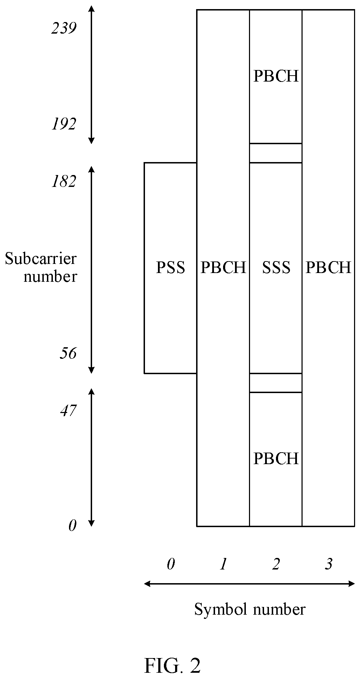

A time-frequency structure of the SSB is shown in FIG. 2. An SSB occupies four consecutive symbols in time domain, and occupies 20 resource blocks (resource blocks, RBs), that is, 240 subcarriers, in frequency domain.

### (2) SIB1 reception

Through the foregoing SSB detection, the UE obtains the MIB. The MIB indicates a candidate time-frequency position of receiving the PDCCH used to schedule SIB1. The UE performs blind detection on the PDCCH at the candidate time-frequency position. If the PDCCH is detected, the UE may receive a PDSCH in a specified manner on a time-frequency resource indicated by downlink control information (downlink control information, DCI) in the PDCCH, to obtain SIB1 carried in the PDSCH. SIB1 includes a lot of information, but a main function is to complete configuration on a primary cell (primary cell, PCell), so that a UE in an idle mode listens to the paging message, or completes uplink timing synchronization through random access, and therefore the UE switches to a connected mode.

An SSB index is associated with a SIB1 occasion (occasion). For example, if SSB index#1 is associated with SIB1 occasion#1, a transmit beam used by the base station for sending SIB1 on SIB1 occasion#1 or sending the PDCCH used to schedule SIB1 is the same as a transmit beam used by the base station for sending SSB index#1. Correspondingly, a receive beam used by the UE for receiving SIB 1 on SIB1 occasion#1 or receiving/detecting the PDCCH used to schedule SIB1 is the same as a receive beam used for receiving SSB index#1.

In embodiments of this application, the space domain filtering parameter may be a space domain filtering parameter of a receive end, for example, a combining matrix or a processing matrix that is used to receive a signal and that is on a plurality of receive antennas or receive channels of the receive end, for example, an equalization matrix or a combining matrix in digital domain, a receive beam in analog domain, or the like; or may be a space domain filtering parameter of a transmit end, for example, a beam-forming (beam-forming) matrix or a processing matrix that is used to send a signal and that is on a plurality of transmit antennas or transmit channels of the transmit end, for example, a precoding matrix or a beam-forming matrix in digital domain, a transmit beam in analog domain, or the like. Space domain filtering parameters being the same may include a space domain filtering parameter used for sending a signal A being the same as a space domain filtering parameter used for receiving a signal B. A receive beam and a transmit beam are sometimes briefly referred to as beams.

### (3) Random access

Four-step RA and two-step RA are defined in the NR. The following provides an example of four-step RA.

Step 1: The UE sends a PRACH to the base station, where the PRACH is also referred to as a message 1 (message 1, Msg1).

The UE first selects, based on reference signal received power (reference signal received power, RSRP) of the SSB, an SSB whose RSRP is greater than a higher layer signaling configuration threshold, and determines, based on an association relationship between the SSB and a random access channel (random access channel, RACH), a RACH occasion (occasion) and a preamble (preamble) index set that can be selected. The UE sends Msg1 based on the space domain filtering parameter used for receiving the SSB. The association relationship between the SSB and the RACH, and a time domain resource and a frequency domain resource of the PRACH are all indicated by using SIB 1. The time domain resource of the PRACH is repeated by using a slot as a periodicity, and each slot includes one or more RACH occasions.

Step 2: The base station sends a random access response (random access response, RAR) to the UE, where the RAR is also referred to as Msg2.

After sending Msg1, the UE performs detection, within a specified time domain window, on DCI scrambled by a random access-radio network temporary identifier (radio network temporary identifier, RNTI). A value of the RA-RNTI is related to a time-frequency position at which the UE sends the PRACH. In other words, the base station may implicitly notify, by using different RA-RNTI values, the UE whether current DCI scrambled by the RA-RNTI is sent to the UE. If the UE detects DCI that is scrambled by using an RA-RNTI corresponding to the UE, the UE receives a PDSCH scheduled by using the DCI. A MAC protocol data unit (protocol data unit, PDU) carried in the PDSCH carries a plurality of subPDUs (subPDUs). Each subPDU indicates a preamble index and includes a MAC RAR, where the MAC RAR includes uplink scheduling information of UE that sends the preamble index.

The RAR has three functions: first, sending an initial uplink transmission timing advance (timing advance, TA) to help the UE complete uplink timing synchronization; second, sending a temporary cell-radio network temporary identifier (temporary cell-RNTI, TC-RNTI); and third, sending uplink scheduling information for scheduling a PUSCH.

Step 3: The UE sends Msg3 to the base station.

If the UE receives the RAR, the UE sends Msg3 on a scheduled PUSCH based on the TA indicated by the RAR. Data carried on the PUSCH is scrambled at a physical layer by using a TC-RNTI, and the data carried on the PUSCH includes an identifier (identifier, ID) of the UE.

Step 4: The base station sends Msg4 to the UE.

After sending Msg3, the UE performs detection, in a corresponding time window, on the DCI scrambled by the TC-RNTI. If the DCI is detected, the UE receives the corresponding PDSCH. The PDSCH includes a contention resolution identifier (contention resolution identifier). If the identifier matches the ID of the UE, it indicates that random access contention resolution succeeds, and the UE converts the TC-RNTI into the cell-radio network temporary identifier (C-RNTI). At this point, the RA procedure of the UE is completed.

Currently, a time domain width of an SSB is four symbols, and a slot (including 14 symbols) includes only two SSBs. Therefore, there are six idle symbols. In a high-frequency deployment scenario, for example, the foregoing deployment scenario on an FR2 frequency band, the SSB is generally sent by using a wide beam, and data is generally sent by using a narrow beam. Therefore, a slot in which the SSB is located cannot be used for data transmission. Slot-level time domain resource overheads caused by the SSB are up to 25%. Even if no data is transmitted in the cell, the SSB still needs to be sent to ensure basic common channel coverage. Consequently, the base station cannot perform continuous symbol power saving, causing high power consumption. For a millimeter wave, due to a limitation of a current component process, power consumption of the base station is mainly related to a duty cycle (that is, time domain overheads) of sending a signal in time domain, and is not much related to a size of a frequency domain resource for sending a signal.

It is clear that, a millimeter-wave SSB coverage enhancement requirement conflicts with a low time-domain overhead requirement. To improve coverage, more narrower beams need to be used. However, due to an implementation constraint, different analog beams can be transmitted only on different time domain symbols. Consequently, time domain overheads are inevitably increased, and more energy consumption of the base station is caused.

To resolve the foregoing problem, a bandwidth of the SSB may be increased, to increase transmit power of the SSB (or reduce an equivalent transmission bit rate of the SSB), and improve SSB coverage. A corresponding SSB may also be referred to as a wideband SSB. In this way, a quantity of SSB beams that need to be sent in time domain can be reduced, and time domain overheads of the SSB can be reduced. For example, a current SSB occupies 20 RBs, about 30 MHz, in frequency domain. If a frequency domain width of the SSB is increased by four times, coverage of a single SSB increases by about 6 dB. Correspondingly, a beam-forming gain requirement of the SSB can be reduced by 6 dB. In other words, a beamwidth of the SSB can be increased by four times, a quantity of SSB beams can be reduced to 1/4 of an original quantity, symbol overheads decrease from 15% to 3.8%, and slot overheads decrease from 25% to 6.3%. Although the wideband SSB can reduce time domain resource overheads of the SSB while ensuring that coverage basically remains unchanged, this solution leads to a wider SSB beam and a lower SSB beam resolution, and further increases a PRACH congestion probability.

As described above, there is an association relationship between PRACH transmission and an SSB. If the SSB beam becomes wider and a quantity of SSB beams is reduced, in a possible implementation, a beam used by the base station for receiving the PRACH also becomes wider, and a PRACH transmission bandwidth or transmission duration is increased to improve coverage. For a UE at a cell edge, power is usually limited. In this case, increasing the bandwidth cannot increase the power. Therefore, the PRACH coverage cannot be improved, and an access success rate of the UE decreases. If the PRACH transmission duration is increased, more resources need to be occupied when the UE transmits the PRACH. This not only increases power consumption of the UE, but also increases the PRACH transmission congestion probability, and reduces the access success rate of the UE. For example, originally, 64 UEs correspond to 64 beams, and transmission is performed at 64 PRACH time domain positions. Currently, a quantity of beams changes to 16. In this case, each beam corresponds to four UEs. However, to ensure coverage, the four UEs each occupy four PRACH time domain positions. This inevitably increases a collision probability.

In embodiments of this application, it is expected that a beam training resolution can be maintained while time domain overheads of the SSB are reduced, to provide a good beam training effect for subsequent SIB1/Paging and PRACH transmission, improve communication performance, and reduce power consumption of the base station and the UE.

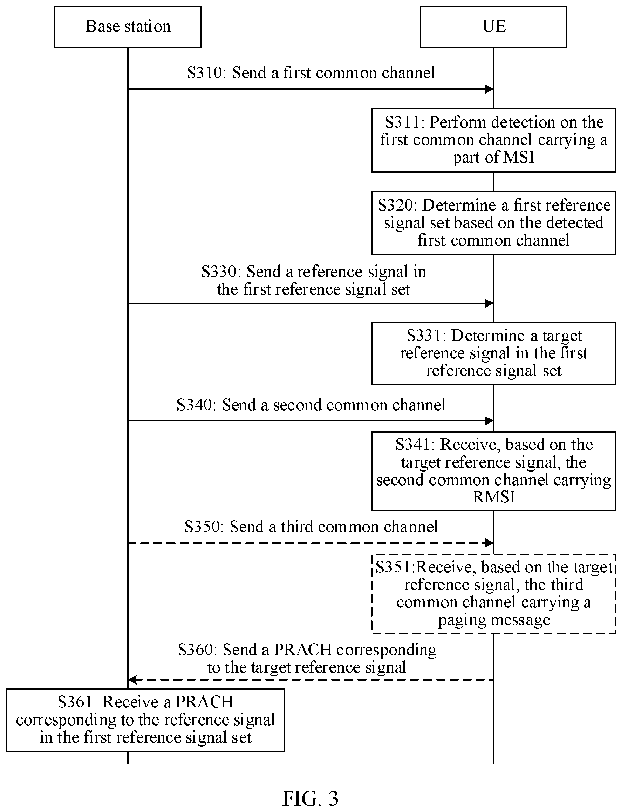

FIG. 3 is a schematic flowchart of an initial access method according to an embodiment of this application. In the embodiment shown in FIG. 3, a reference signal (reference signal, RS) set corresponding to an SSB is introduced. The SSB is sent by using a wideband and a wide beam, and an RS in the RS set occupies a small quantity of time domain resources through frequency division multiplexing and is sent by using a narrow beam. A transmit beam of the RS in the RS set is a refinement of a transmit beam of the SSB. Narrow beam training is completed by using the RS set, to find an optimal narrow beam pointing to a UE, so that in the method, time domain resource overheads of the SSB can be effectively reduced while communication efficiency is ensured. In the embodiment of this application, wideband and wide beam sending means sending performed by using a large bandwidth in frequency domain and a wide transmit beam. The following describes in detail the embodiment shown in FIG. 3.

S310: A base station sends a first common channel.

The first common channel is a synchronization signal, or the first common channel includes a synchronization signal and a physical broadcast channel. The synchronization signal may carry a physical cell identifier, the physical broadcast channel may carry a part of minimum system information (minimum system information, MSI) of a cell, and the part of MSI indicates a transmission configuration of remaining minimum system information (remaining minimum system information, RMSI) of the cell. The cell is a cell managed by the base station. The transmission configuration of the RMSI that is indicated by the part of MSI may be a transmission configuration of DCI for scheduling the RMSI. For example, the part of MSI indicates a time-frequency resource of the DCI for scheduling the RMSI. The part of MSI carried in the broadcast channel may also be referred to as a MIB, and the RMSI may also be referred to as SIB 1.

Without loss of generality, the following uses an example in which the first common channel is an SSB for description.

Without loss of generality, the following provides description by using an example in which a space domain filtering parameter at a transmit end is a transmit beam and a space domain filtering parameter at a receive end is a receive beam.

Optionally, a width of a frequency domain resource occupied by one SSB is greater than 20 RBs. Optionally, one SSB includes a plurality of sub-SSBs at a same time domain position but different frequency domain positions, and each sub-SSB is a repetition of transmission of a same SSB in frequency domain.

S311: A UE performs detection on the first common channel from the base station, and determines the detected first common channel.

An SSB in an SSB pattern detected by the UE is denoted as SSB#1 (that is, the first common channel), and the pattern to which SSB#1 belongs is denoted as a first SSB pattern. The base station sends all SSBs in the first SSB pattern to a UE in cell coverage. That the UE detects the SSB means that the UE successfully detects the synchronization signal, or detected synchronization signal strength is greater than a preset strength threshold; or the UE successfully completes detection and decoding of the broadcast channel, for example, a cyclic redundancy check (cyclic redundancy check, CRC) on a decoding result succeeds. SSB#1 may be the first SSB successfully detected by the UE, or may be an SSB whose received signal quality is greater than a preset quality threshold in a plurality of SSBs successfully detected by the UE, or may be an SSB whose received signal quality is the best in a plurality of SSBs successfully detected by the UE. Optionally, when there are a plurality of SSBs whose received signal quality is greater than the preset quality threshold in the first SSB pattern, the first common channel herein may correspond to the plurality of SSBs. The received signal quality in this application may be RSRP.

The UE may complete SSB transmit beam training on a base station side by detecting the SSB in the SSB pattern. The beam training herein may also be understood as wide beam training because a transmit beam of the SSB is wide.

S320: The UE determines, based on the detected first common channel, a first reference signal set corresponding to the first common channel.

Each SSB in the first SSB pattern corresponds to one RS set, and an RS set corresponding to SSB#1 is denoted as the first RS set. The first RS set includes at least two RSs.

Optionally, first indication information in SSB#1 indicates the first RS set corresponding to SSB#1.

Optionally, the first indication information in SSB#1 indicates a universal RS set. The universal RS set herein is a set including RSs corresponding to all SSBs in the first SSB pattern, and the first RS set is a subset of the universal RS set. Further, SSB#1 may further indicate a correspondence between an RS in the universal RS set and an SSB in the first SSB pattern, to indirectly indicate an RS set corresponding to SSB#1, namely, the first RS set.

S330: The base station sends a reference signal in the first reference signal set.

The reference signal in the first reference signal set is used to perform narrow beam training, to find an optimal narrow beam pointing to the UE. In other words, different reference signals in the first reference signal set correspond to different narrow transmit beams.

A sequence of performing S320 and S330 is not limited in this application. S320 may be performed before S330, or S330 may be performed before S320.

Without loss of generality, the RS in the first reference signal set is referred to as a beam-training reference signal (beam-training reference signal, B-RS) below. The first RS set is also referred to as a first B-RS set. In this embodiment of this application, the terms "RS" and "B-RS" are interchangeable unless otherwise specified.

One B-RS set corresponds to one B-RS pattern, and a B-RS pattern defines a quantity of B-RSs in the pattern, a time-frequency position of each B-RS, and a sending sequence. A definition of the B-RS pattern may be predefined in a protocol, or may be indicated in the SSB. Alternatively, a part of information in the B-RS pattern is predefined in a protocol, and a part of information is indicated in the SSB. In this embodiment of this application, the terms "B-RS set" and "B-RS pattern" are interchangeable.
- Time-frequency position of the B-RS in the first B-RS set

The time-frequency position of the B-RS in the B-RS set may be a relative position or an absolute position.

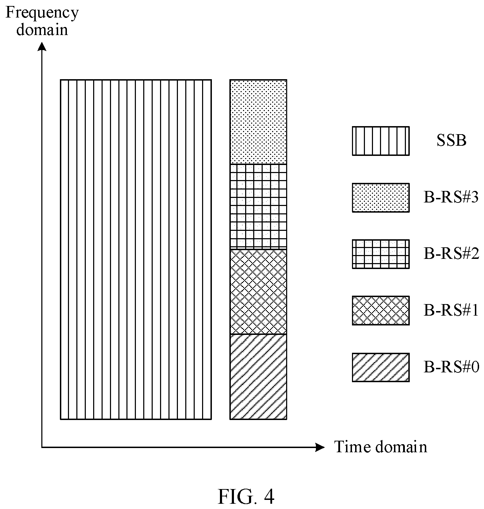

Optionally, as shown in FIG. 4, the time-frequency position of the B-RS is defined by using a relative offset value relative to a time-frequency position of an SSB. The SSB herein may be SSB#1, or may be a preset SSB in the SSB pattern to which SSB#1 belongs. The offset value may be predefined in a protocol, or may be indicated in the SSB. The offset value is a relative position. When the offset value is indicated by using the SSB, the time-frequency position of the B-RS in the first B-RS set can be flexibly indicated, and signaling overheads can be reduced. In other words, the time-frequency position of the B-RS in the first B-RS set is determined based on the time-frequency position of SSB#1. Alternatively, the time-frequency position of the B-RS in the first B-RS set is determined based on a time-frequency position corresponding to a preset SSB index in the SSB pattern to which SSB#1 belongs.

The UE completes downlink timing synchronization based on SSB#1, that is, obtains radio frame, subframe, slot, and symbol synchronization. The time domain position of the B-RS in the first B-RS set may be a specific absolute position in time domain such as a radio frame number, a radio subframe number, a slot number, or a symbol number. The UE completes downlink frequency synchronization based on SSB#1, that is, obtains radio resource block and subcarrier synchronization. The frequency domain position of the B-RS in the first B-RS set may be a specific absolute position in frequency domain such as a radio resource block number or a subcarrier number. The absolute position in time domain and the absolute position in frequency domain may be predefined in a protocol, or may be indicated by the base station to the UE by using the SSB. If the time-frequency position of the B-RS in the first B-RS set is indicated by the base station to the UE by using SSB#1, for the UE, the time-frequency position of the B-RS may be determined based on SSB#1.

Optionally, different B-RSs in the first B-RS set have different time-frequency positions. Different B-RSs may correspond to different time domain positions, and B-RS coverage can be improved through time division multiplexing between the B-RSs. Alternatively, different B-RSs have a same time domain position but different frequency domain positions. For example, all B-RSs in the first B-RS set occupy a same time domain symbol, and different B-RSs correspond to different frequency domain positions on the symbol. In comparison with beam sweeping performed by using the SSB, beam sweeping performed by using the B-RS greatly reduces time domain overheads, and therefore reduces energy consumption of the UE and the base station. Alternatively, both time domain positions and frequency domain positions of different B-RSs are different.

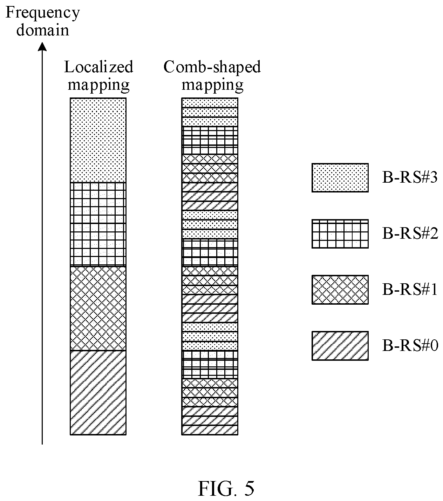

Mapping of the B-RS in frequency domain may be localized mapping or comb-shaped mapping, as shown in FIG. 5. For example, all B-RSs occupy a same time domain symbol. For comb-shaped mapping in frequency domain, each B-RS occupies one frequency domain unit every M frequency domain units in frequency domain, and different B-RSs may occupy different frequency domain units in M adjacent frequency domain units for sending. Herein, the frequency domain unit may be a subcarrier, or K consecutive subcarriers, where K>1. K may be any one of 2, 3, 4, 6, 12, and n*12, where n is a positive integer. In the comb-shaped mapping shown in FIG. 5, M=4, and K=3. Localized mapping facilitates coherent processing of the UE and improves B-RS sequence detection performance. The comb-shaped mapping enables different B-RSs to obtain balanced frequency domain diversity gains, to avoid an inaccurate beam training result caused by different frequency selective fading. For example, B-RS#1 corresponds to beam#1, and B-RS#2 corresponds to beam#2. Compared with beam#2, beam#1 is more targeted at the UE. However, because fading in frequency domain in which B-RS#2 is located is small, a measurement result of the UE indicates that received quality of B-RS#2 is better, causing incorrect beam selection.

It may be understood that a definition and a determining manner of the time-frequency position of the B-RS in the universal B-RS set may be the same as a definition and a determining manner of the time-frequency position of the B-RS in the first B-RS set.
- Transmit beam of the B-RS in the first B-RS set

The transmit beam of the B-RS in the first B-RS set may have the following three design manners.

Manner 1: The transmit beam of the B-RS in the first B-RS set is a refined beam of a transmit beam of SSB#1, or the transmit beam of the B-RS in the first B-RS set falls within a range of a transmit beam of SSB#1. A one-dimensional beam is used as an example. If a beam range of SSB#1 is [*a*₁,*b*₁], beam ranges of the B-RSs in the first B-RS set all fall within the range of [*a*₁,*b*₁]. For example, there are M B-RSs in the first B-RS set, and beam ranges of the M B-RSs may sequentially be [*a*₁,*a*₁ + Δ], [*a*₁ + Δ, *a*₁ + 2Δ], ..., and [*a*₁ + (*M* - 1) · Δ, *b*₁], where Δ= (*b*₁ - *a*₁)/*M*, *a*₁, *b*₁, and Δ are real numbers, and M is a positive integer.

It should be noted that, in the foregoing example, the transmit beam of the B-RS in the first B-RS set completely overlaps the transmit beam of SSB#1. However, this is not limited in this application. Alternatively, as long as the transmit beam of SSB#1 is wider than the transmit beam of the B-RS in the first B-RS set, and the two beams partially overlap, it may be referred to that the transmit beam of the B-RS falls within the range of the transmit beam of SSB#1.

If SSB#2 is an SSB different from SSB#1 in the first SSB pattern, a time-frequency position of a second B-RS set corresponding to SSB #2 and a time-frequency position of the first B-RS set do not overlap. If B-RS#a is any B-RS in the first B-RS set, and B-RS#b is any B-RS in the second B-RS set, a time-frequency position of B-RS#a and a time-frequency position of B-RS#b do not overlap or do not overlap partially. Optionally, a transmit beam of the first B-RS set and a transmit beam of the second B-RS set do not overlap.

In the foregoing implementation, beam training by using the B-RS can effectively improve narrow beam training efficiency.

Manner 2: A transmit beam of a part of the B-RSs in the first B-RS set is a refinement of a transmit beam of SSB#1, in other words, a transmit beam of a part of the B-RSs falls within a range of the transmit beam of SSB#1, and a transmit beam of a part of the B-RSs is out of the range of the transmit beam of SSB#1. A one-dimensional beam is used as an example. It is assumed that a beam range of SSB#1 is [*a*₁,*b*₁]. For example, there are M B-RSs in the first B-RS set, and beam ranges of the M B-RSs may sequentially be [*a*₁ - *k*(*b*₁ - *a*₁), *a*₁ - *k*(*b*₁ - *a*₁) + Δ] , [*a*₁ - *k*(*b*₁ - *a*₁) + Δ, *a*₁ - *k*(*b*₁ - *a*₁) + 2Δ], ..., and [*b*₁ + *k*(*b*₁ - *a*₁)-Δ, *b*₁ + *k*(*b*₁ *- a*₁)], where Δ= (1 + 2k)(*b*₁ - *a*₁)/M, *a*₁, *b*₁, and Δ are real numbers, M is a positive integer, and k is a positive real number.

Manner 2 helps find an optimal narrow beam pointing to the UE, and improve efficiency of communication between the UE and the base station.
- Transmit beam of the B-RS in the universal B-RS set

Transmit beams of the B-RSs in the universal B-RS set are refined beams of the transmit beams of all SSBs in the first SSB pattern. A one-dimensional beam is used as an example. If a union set of ranges of the transmit beams of all SSBs in the first SSB pattern is [*a*, *b*], beam ranges of the B-RSs in the universal B-RS set all fall within the range of [*a*, *b*]. For example, there are N B-RSs in the universal B-RS set, beam ranges of the N B-RSs may sequentially be [*a*, *a* + Δ], [*a* + Δ, *a* + 2Δ], ..., and [*a* + (*N-*1) · Δ, *b*], where Δ= (*b- a*)/*N*, a, b, and Δ are real numbers, and N is a positive integer.

Traversing by using the universal B-RS set helps find an optimal narrow beam pointing to the UE, and improve efficiency of communication between the UE and the base station.

Optionally, transmit beams of different B-RSs may not overlap or may partially overlap.

S331: The UE measures the reference signal in the first reference signal set, and determines a target reference signal.

It may be understood that when the UE successfully detects a plurality of SSBs, the UE may measure all reference signals that correspond to the plurality of SSBs and that are in the reference signal set. Herein, an example in which the UE measures the reference signal in the first reference signal set (that is, the first B-RS set) is used for description. Receiving a signal (or a channel) and detecting a signal (or a channel) are not distinguished in this embodiment of this application, and are interchangeable.

Optionally, a receive beam used by the UE for measuring the reference signal in the first reference signal set is the same as a receive beam used by the UE for receiving the first common channel (SSB#1).

The target reference signal (denoted as B-RS#1) herein may be a B-RS whose received signal quality is the best in the B-RSs in the first B-RS set measured by the UE, or may be the first B-RS whose received signal quality is greater than or equal to a preset RS received quality threshold, or may be any B-RS whose received signal quality is greater than or equal to a preset RS received quality threshold. When there are a plurality of B-RSs whose received signal quality is greater than or equal to the preset RS received quality threshold, there may be a plurality of target reference signals herein.

When SSB#1 indicates the universal B-RS set, S331 may be replaced with that the UE measures the universal B-RS set, to determine the target reference signal.

S340: The base station sends a second common channel.

S341: The UE receives the second common channel based on the target reference signal.

The second common channel is used to carry system information other than the system information carried in the first common channel. The part of system information and the system information carried in the first common channel form basic system information of the cell. For example, the second common channel carries the RMSI described in S310. The second common channel may be a PDSCH carrying SIB1, or may include a PDSCH carrying SIB1 and a PDCCH for scheduling the PDSCH.

Optionally, one first common channel corresponds to one set of second common channels (set of second common channels), and the set of second common channels includes at least two second common channels. A correspondence may be predefined in a protocol, or may be indicated by the base station to the UE by using the first common channel. The UE may determine the set of second common channels based on the first common channel. Optionally, a time-frequency position of the second common channel in the set of second common channels is determined based on a time-frequency position of the first common channel, or a time-frequency position of the second common channel in the set of second common channels is indicated by the first common channel. A time domain position of the second common channel may be determined by using a relative time domain offset value between the time domain position of the second common channel and a time domain position of the first common channel, or may be an absolute time domain position directly indicated by using indication information in the first common channel. A frequency domain position of the second common channel may be determined by using a relative frequency domain offset value between the frequency domain position of the second common channel and a frequency domain position of the first common channel, or may be an absolute frequency domain position directly indicated by using indication information in the first common channel.

Optionally, a first mapping relationship exists between the second common channel in the set of second common channels and the RS in the first RS set. Optionally, a quantity of second common channels included in the set of second common channels is the same as a quantity of RSs included in the first RS set. In this case, the first mapping relationship is a one-to-one correspondence. To be specific, it is satisfied that one second common channel in the set of second common channels corresponds to one RS in the first RS set, different second common channels in the set of second common channels correspond to different RSs in the first RS set, and different RSs in the first RS set correspond to different second common channels in the set of second common channels. Optionally, the first mapping relationship is a many-to-one mapping relationship. To be specific, a plurality of second common channels in the set of second common channels correspond to one RS in the first RS set, and different RSs correspond to different second common channels in the set of second common channels. The first mapping relationship may be predefined in a protocol or may be indicated by the first common channel.

Optionally, the base station sends the second common channel in the set of second common channels. For a second common channel, a transmit beam of the second common channel is the same as a transmit beam of a B-RS corresponding to the second common channel.

Optionally, different second common channels in the set of second common channels correspond to different base station transmit beams. In this manner, it can be supported that one first common channel corresponds to a plurality of second common channels, so that the second common channel can be transmitted by using a narrow beam, to improve transmission efficiency of the second common channel by the UE.

Optionally, the UE determines, based on the first mapping relationship, one or more second common channels corresponding to a target RS, and receives the one or more second common channels by using a receive beam the same as a receive beam used for receiving the target RS. In this manner, it can be supported that the UE receives only the second common channel corresponding to the target RS, to reduce receive power consumption of the UE. In addition, transmission performance is improved by using a matched receive space domain filtering parameter.

For ease of description, SIB1 is used to replace the second common channel for description below.

Optionally, any B-RS in the first B-RS set corresponds to at least one SIB 1. Without loss of generality, it is assumed that a target SIB1 corresponding to the target reference signal B-RS#1 is SIB1#1. ThatB-RS#1 corresponds to SIB1#1 may mean that transmission of B-RS#1 and transmission of SIB 1#1 have a same transmit/receive beam. Specifically, the base station may send B-RS#1 and SIB 1#1 by using a same transmit beam, and the UE may receive B-RS#1 and SIB1#1 by using a same receive beam.

The UE may receive only SIB1#1 corresponding to B-RS#1. Alternatively, when there are a plurality of B-RSs whose received signal quality is greater than or equal to the preset RS received quality threshold in the first B-RS set, the UE may receive SIB1 corresponding to each B-RS in the plurality of B-RSs. Alternatively, the UE may receive SIB1s corresponding to all B-RSs in the first B-RS set. Alternatively, the UE may receive SIB1 corresponding to each B-RS in the universal B-RS set, and SIB1s corresponding to all B-RSs in the universal B-RS set form a universal SIB 1 set. A larger quantity of SIB 1 s received by the UE indicates a higher SIB 1 receiving success rate, because content in different SIB1s in the universal SIB1 set is the same, but transmit and/or receive beams are different.

S350: Optionally, the base station sends a third common channel.

S351: Optionally, the UE receives, based on the target reference signal (B-RS#1), the third common channel carrying a paging message.

The third common channel may be a paging channel, or the third common channel includes a paging channel and a PDCCH for scheduling the paging channel. That the UE receives the third common channel may mean that the UE receives the paging channel at a time-frequency position corresponding to the paging channel, or may mean that the UE blindly detects the PDCCH at a time-frequency position of the PDCCH, where the PDCCH carries DCI for scheduling the paging channel.

Optionally, one first common channel corresponds to one set of third common channels (set of third common channels), and the set of third common channels includes at least two third common channels. A correspondence may be predefined in a protocol, or may be indicated by the base station to the UE by using the second common channel. Optionally, the UE determines, based on the second common channel, the set of third common channels corresponding to the first common channel. Optionally, a time-frequency position of the third common channel in the set of third common channels is determined based on second indication information of the second common channel and an index value of the first common channel.

Optionally, a second mapping relationship exists between the third common channel in the set of third common channels and the RS in the first RS set. Optionally, a quantity of third common channels included in the set of third common channels is the same as a quantity of RSs included in the first RS set. In this case, the second mapping relationship is a one-to-one correspondence. Optionally, the second mapping relationship is a many-to-one mapping relationship. To be specific, a plurality of third common channels in the set of third common channels correspond to one RS in the first RS set, and different RSs correspond to different third common channels in the set of third common channels. The second mapping relationship may be predefined in a protocol or may be indicated by the second common channel.

Optionally, the base station sends the third common channel in the set of third common channels. For a third common channel, a transmit beam of the third common channel is the same as a transmit beam of a B-RS corresponding to the third common channel.

Optionally, different third common channels in the set of third common channels correspond to different base station transmit beams. In this manner, it can be supported that one first common channel corresponds to a plurality of third common channels, so that the third common channel can be transmitted by using a narrow beam, to improve transmission efficiency of the third common channel by the UE.

Optionally, the UE determines, based on the second mapping relationship, one or more third common channels corresponding to the target RS, and receives the one or more third common channels by using a receive beam the same as the receive beam used for receiving the target RS. In this manner, it can be supported that the UE receives only the third common channel corresponding to the target RS, to reduce receive power consumption of the UE. In addition, transmission performance is improved by using a matched receive space domain filtering parameter.

For ease of description, the following uses an example in which the third common channel is a paging channel for description.

Optionally, any B-RS in the first B-RS set corresponds to at least one paging channel. Without loss of generality, it is assumed that a target paging channel corresponding to the target reference signal B-RS#1 is paging channel#1. That B-RS#1 corresponds to paging channel#1 may mean that transmission of B-RS#1 and transmission of paging channel#1 have a same transmit/receive beam. Specifically, the base station may send B-RS#1 and paging channel#1 by using a same transmit beam, and the UE may receive B-RS#1 and paging channel#1 by using a same receive beam.

The UE may receive only paging channel#1 corresponding to B-RS#1. Alternatively, when there are a plurality of B-RSs whose received signal quality is greater than or equal to the preset RS received quality threshold in the first B-RS set, the UE may receive a paging channel corresponding to each B-RS in the plurality of B-RSs. Alternatively, the UE may receive paging channels corresponding to all B-RSs in the first B-RS set. Alternatively, the UE may receive a paging channel corresponding to each B-RS in the universal B-RS set, and paging channels corresponding to all B-RSs in the universal B-RS set form the universal paging channel set. A larger quantity of paging channels received by the UE indicates a higher paging channel receiving success rate, because content in different paging channels in the universal paging channel set is the same, but transmit and/or receive beams are different.

S360: Optionally, the UE determines a random access channel corresponding to the target reference signal, and sends the random access channel.

The random access channel herein is a PRACH. A PRACH is defined as a PRACH preamble on a time-frequency resource. PRACHs on different time-frequency resources or different preambles on a same time-frequency resource correspond to different PRACHs.

Optionally, one first common channel corresponds to one random access channel set (PRACH set), and the random access channel set includes at least two random access channels. A correspondence may be predefined in a protocol, or may be indicated by the base station to the UE by using the second common channel. The UE may determine, based on the second common channel, the random access channel set corresponding to the first common channel. Optionally, a time-frequency position of the random access channel in the random access channel set is determined based on third indication information of the second common channel and an index value of the first common channel. Optionally, different random access channels in the random access channel set correspond to different base station receive beams. In this manner, it can be supported that one first common channel corresponds to a plurality of random access channels, so that the base station can perform fine beam transmission on the random access channel, to improve transmission efficiency of the random access channel.

Optionally, a third mapping relationship exists between the random access channel in the random access channel set and the RS in the first RS set. Optionally, a quantity of random access channels included in the random access channel set is the same as a quantity of RSs included in the first RS set. In this case, the third mapping relationship is a one-to-one correspondence. Optionally, the third mapping relationship is a many-to-one mapping relationship. To be specific, a plurality of random access channels in the random access channel set correspond to one RS in the first RS set, and different RSs correspond to different random access channels in the random access channel set. The third mapping relationship may be predefined in a protocol or may be indicated by the second common channel.

Optionally, the UE determines, based on the third mapping relationship, one or more random access channels corresponding to the target RS. When the target RS corresponds to a plurality of random access channels, the UE may randomly select a random access channel from the plurality of random access channels. The UE sends the random access channel by using a space domain filtering parameter used for receiving the target RS. In this manner, it can be supported that the UE sends only the random access channel corresponding to the target RS, to reduce power consumption of the UE and reduce resource overheads of the random access channel, and therefore reduce a random access collision probability. In addition, transmission performance is improved by using the matched transmit space domain filtering parameter.

Optionally, B-RS#1 corresponds to at least one PRACH. When there are a plurality of PRACHs corresponding to B-RS#1, the UE may select one of the PRACHs for sending. Without loss of generality, a target random access channel corresponding to the target reference signal B-RS#1 is denoted as PRACH#1. That B-RS#1 corresponds to PRACH#1 may mean that transmission of B-RS#1 and transmission of PRACH#1 have a same space domain filtering parameter. Specifically, a space domain filtering parameter used by the UE for sending PRACH#1 is the same as a space domain filtering parameter used for receiving B-RS#1, and a beam used by the base station for receiving PRACH#1 is the same as a beam used for sending B-RS#1.

Each B-RS corresponds to at least one PRACH, and PRACHs corresponding to all B-RSs in the universal B-RS set form a universal PRACH set.

Because the UE sends the PRACH only on PRACH#1 corresponding to B-RS#1, PRACH resources occupied by the UE can be reduced, and a probability of a PRACH collision between different UEs can be reduced.

S361: Optionally, the base station performs detection on the PRACH corresponding to the RS in the first RS set.

If the base station detects the PRACH at a time-frequency position of the corresponding PRACH, it indicates that the UE sends the PRACH, and a random access procedure is triggered. For the random access procedure, refer to the foregoing related descriptions.

Optionally, when the base station performs the detection on the PRACH corresponding to the RS in the first RS set, a space domain filtering parameter used is the same as a space domain filtering parameter used for sending a B-RS corresponding to the PRACH. In this manner, transmission performance can be improved by using the matched space domain filtering parameter.

Further, the base station may send a RAR by using a space domain filtering parameter the same as a space domain filtering parameter used for receiving the PRACH, and the PRACH is denoted as a target PRACH. The UE may receive the RAR by using a receive beam the same as a receive beam used for receiving the target RS, to improve RAR transmission performance. The UE may further send Msg3 by using a space domain filtering parameter the same as a space domain filtering parameter used for receiving the target RS, and the base station may receive Msg3 by using a receive beam the same as a receive beam used for receiving the target PRACH, to improve transmission performance of Msg3. The base station may further send Msg4 by using a space domain filtering parameter the same as a space domain filtering parameter used for receiving the target PRACH, and the UE may further receive Msg4 by using a receive beam the same as a receive beam used for receiving the target RS, to improve transmission performance of Msg4.

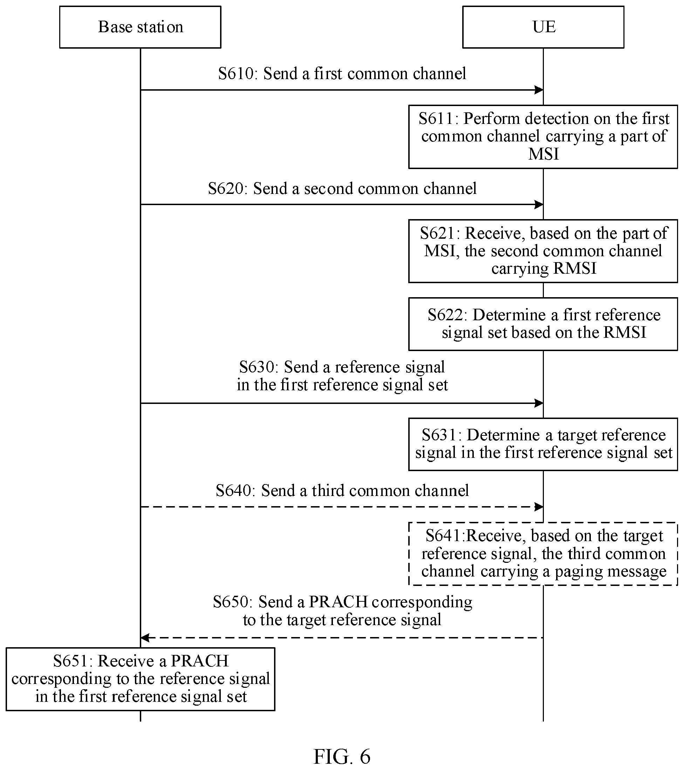

FIG. 6 is another possible embodiment of this application. After detecting a first common channel carrying a part of MSI (for example, a MIB), a UE continues to receive, based on the part of MSI, a second common channel carrying RMSI (for example, SIB 1); then determines, based on the second common channel, a first reference signal set corresponding to the second common channel; then detects the first reference signal set and determines a target reference signal; and then receives, based on the target reference signal, a third common channel carrying a paging message, and sends a random access channel corresponding to the target reference signal. In this embodiment, a base station sends the first common channel and the second common channel by using a same transmit space domain filtering parameter. Correspondingly, the UE receives the first common channel and the second common channel by using the same transmit space domain filtering parameter. For implementation of S610 in FIG. 6, refer to S310 in FIG. 3. For S611, refer to S311. For S620, refer to S340. For S621, refer to related descriptions of receiving SIB 1 in the foregoing procedure in which the UE initially accesses a cell. For S630, refer to S330. For S631, refer to S331. For S640, refer to S350. For S651, refer to S361. The following describes S622 in detail.

S622: The UE determines the first reference signal set based on the RMSI.

The UE determines the first reference signal set based on indication information in the second common channel (SIB1). For a relationship between the second common channel and the first reference signal set, refer to the relationship between the first common channel and the first reference signal set in S320 and S330. For a related design of the first reference signal set, directly refer to related descriptions of S330.

S641: Optionally, the UE receives, based on the target reference signal (B-RS#1), the third common channel carrying a paging message.

Optionally, one second common channel corresponds to one set of third common channels (set of third common channels), and the set of third common channels includes at least two third common channels. A correspondence may be predefined in a protocol, or may be indicated by the base station to the UE by using the second common channel. Optionally, the UE determines, based on the second common channel, the set of third common channels. Optionally, a time-frequency position of the third common channel in the set of third common channels is determined based on second indication information of the second common channel and an index value of the first common channel.

For other descriptions related to the third common channel, a correspondence between the third common channel and the first RS set, processing methods for sending the third common channel by the base station and receiving the third common channel by the UE, and the like refer to S351.

S650: Optionally, the UE determines a random access channel corresponding to the target reference signal, and sends the random access channel.

Optionally, one second common channel corresponds to one random access channel set, and the random access channel set includes at least two random access channels. A correspondence may be predefined in a protocol, or may be indicated by the base station to the UE by using the second common channel. The UE may determine the random access channel set based on the second common channel. Optionally, a time-frequency position of the random access channel in the random access channel set is determined based on third indication information of the second common channel and an index value of the first common channel. Optionally, different random access channels in the random access channel set correspond to different base station receive beams. In this manner, it can be supported that one first common channel corresponds to a plurality of random access channels, so that the base station can perform fine beam transmission on the random access channel, to improve transmission efficiency of the random access channel.

For other descriptions related to the random access channel, a correspondence between the random access channel and the first RS set, a processing method for sending the random access channel by the UE, and the like, refer to S360.

For subsequent processing of a RAR, Msg3, and Msg4 by the base station and the UE, refer to related descriptions of the embodiment shown in FIG. 3.

The first reference signal set in the embodiment in FIG. 6 is determined based on indication information in SIB1, and SIB 1 can carry a large quantity of information bits. This can improve flexibility of configuring the first reference signal set.

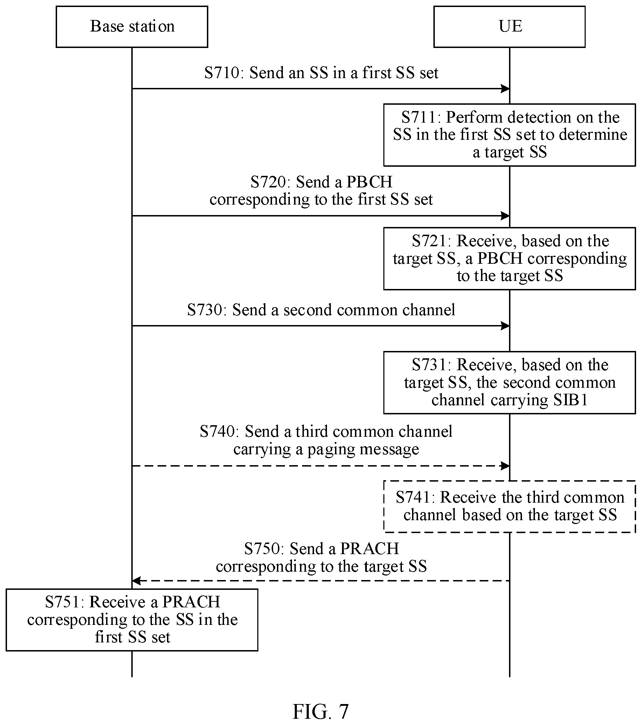

FIG. 7 is another possible embodiment of this application. In this embodiment, an SSB is divided into an SS and a PBCH, and an SS with good coverage performance is transmitted through FDM by using a narrow beam, to reduce time domain overheads and provide a sufficiently fine beam resolution; and a PBCH with poor coverage performance is sent by using a wideband and a wide beam, to improve coverage. The following describes the embodiment in detail.

S710: A base station sends an SS in a first SS set, where the first SS set includes at least two SSs.

In this embodiment of this application, unless otherwise specified, an SS is a combination of a PSS and an SSS, where the PSS and the SSS may be transmitted through time division. Different SSs in the first SS set have different time-frequency positions. Optionally, the different SSs in the first SS set have different space domain filtering parameters at a transmit end.

S711: A UE performs detection on the SS in the first SS set to determine a target SS.

For a specific determining process, refer to S331.

S720: The base station sends a PBCH corresponding to the first SS set.

S721: The UE receives, based on the target SS, a PBCH corresponding to the target SS.

A correspondence between a transmit beam of the PBCH and a transmit beam of the SS in the first SS set may be obtained by referring to the correspondence between the transmit beam of SSB#1 and the transmit beam of the first B-RS set in FIG. 3.

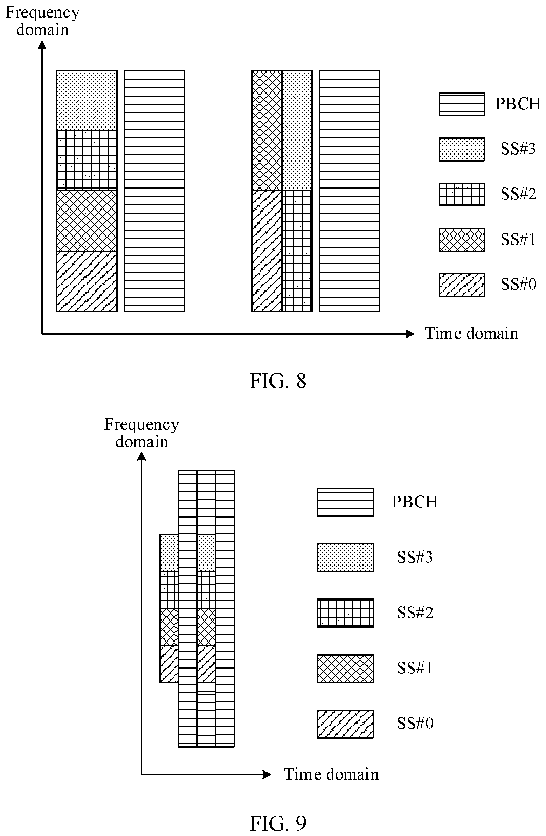

As shown in FIG. 8 and FIG. 9, the first SS set may include four SSs, that is, four SSs correspond to one PBCH. Different SSs in the first SS set may be frequency division multiplexed (as shown in a left figure in FIG. 8), or may be time division multiplexed, or may be partially frequency division multiplexed and partially time division multiplexed (as shown in a right figure in FIG. 8). The four SSs as a whole are adjacent to the PBCH in time domain.

Frequency domain mapping of different SSs in the first SS set may be localized mapping (as shown in FIG. 9), or may be comb-shaped mapping (refer to the comb-shaped mapping of the B-RS in FIG. 5).

S730: The base station sends a second common channel.

S731: The UE receives, based on the target SS, the second common channel carrying SIB1. For specific implementation, refer to S341, except that the B-RS in S341 is replaced with the SS herein, and the first common channel is replaced with the PBCH.

For S740, S741, S750, and S751, refer to S350, S351, S360, and S361 respectively, and replace the B-RS with the SS and replace the first common channel with the PBCH.

For subsequent processing of a RAR, Msg3, and Msg4 by the base station and the UE, refer to related descriptions of the embodiment shown in FIG. 3.

It may be understood that, to implement functions in the foregoing embodiments, the base station and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on a particular application scenario and a design constraint of the technical solutions.

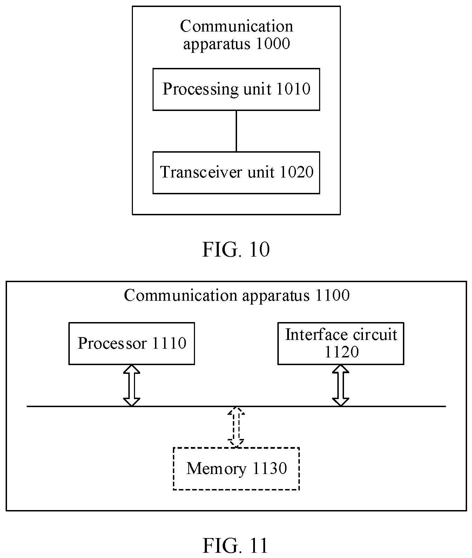

FIG. 10 and FIG. 11 are schematics of possible structures of communication apparatuses according to embodiments of this application. These communication apparatuses may be configured to implement functions of the UE or the base station in the foregoing method embodiments, and therefore can also implement beneficial effects of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

### As shown in FIG. 10, a communication apparatus 1000 includes a processing unit 1010 and a transceiver unit 1020. The communication apparatus 1000 is configured to implement functions of the UE or the base station in the method embodiments shown in FIG. 3, FIG. 6, and

FIG. 7.

When the communication apparatus 1000 is configured to implement the functions of the UE in the method embodiment shown in FIG. 3, the transceiver unit 1020 may be configured to: perform detection on a first common channel, receive a second common channel based on the first common channels, receive a third common channel based on a target reference signal, and send a PRACH corresponding to the target reference signal; and the processing unit 1010 is configured to: determine a first reference signal set based on the detected first common channels, and determine the target reference signal in the first reference signal set.

When the communication apparatus 1000 is configured to implement the functions of the base station in the method embodiment shown in FIG. 3, the transceiver unit 1020 is configured to send a first common channel, a reference signal in a first reference signal set, and a second common channel. Optionally, the transceiver unit 1020 may be further configured to send a third common channel and receive a PRACH in a universal PRACH set.

For more detailed descriptions of the processing unit 1010 and the transceiver unit 1020, refer to related descriptions of the method embodiment shown in FIG. 3.

When the communication apparatus 1000 is configured to implement the functions of the UE in the method embodiment shown in FIG. 6, the transceiver unit 1020 may be configured to: perform detection on a first common channel, receive a second common channel based on the first common channel, receive a third common channel based on a target reference signal, and send a PRACH corresponding to the target reference signal; and the processing unit 1010 is configured to: determine a first reference signal set based on the second common channel, and determine the target reference signal in the first reference signal set.

When the communication apparatus 1000 is configured to implement the functions of the base station in the method embodiment shown in FIG. 6, the transceiver unit 1020 is configured to send a first common channel, a reference signal in a first reference signal set, and a second common channel. Optionally, the transceiver unit 1020 may be further configured to send a third common channel and receive a PRACH in a universal PRACH set.

For more detailed descriptions of the processing unit 1010 and the transceiver unit 1020, refer to related descriptions of the method embodiment shown in FIG. 6.

When the communication apparatus 1000 is configured to implement the functions of the UE in the method embodiment shown in FIG. 7, the transceiver unit 1020 may be configured to: perform detection on an SS in a first SS set, receive, based on a target SS, a PBCH corresponding to the target SS, receive, based on the target SS, a second common channel carrying SIB1, receive a third common channel based on the target SS, and send a PRACH corresponding to the target SS; and the processing unit 1010 is configured to determine the target SS.

When the communication apparatus 1000 is configured to implement the functions of the base station in the method embodiment shown in FIG. 7, the transceiver unit 1020 is configured to send an SS in a first SS set, a PBCH, and a second common channel. Optionally, the transceiver unit 1020 may be further configured to send a third common channel and receive a PRACH in a universal PRACH set.

For more detailed descriptions of the processing unit 1010 and the transceiver unit 1020, refer to related descriptions of the method embodiment shown in FIG. 7.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130 configured to store instructions executed by the processor 1110, or store input data required by the processor 1110 to run the instructions, or store data generated after the processor 1110 runs the instructions.

When the communication apparatus 1100 is configured to implement the method shown in FIG. 3, FIG. 6, or FIG. 7, the processor 1110 is configured to implement a function of the processing unit 1010, and the interface circuit 1120 is configured to implement a function of the transceiver unit 1020.

When the communication apparatus is a chip used in a terminal, the terminal chip implements functions of the terminal in the foregoing method embodiments. The terminal chip receives information from another module (for example, a radio frequency module or an antenna) in the terminal, where the information is sent by a base station to the terminal; or the terminal chip sends information to another module (for example, a radio frequency module or an antenna) in the terminal, where the information is sent by the terminal to a base station.

When the foregoing communication apparatus is a module used in a base station, the base station module implements functions of the base station in the foregoing method embodiments. The base station module receives information from another module (for example, a radio frequency module or an antenna) in the base station, where the information is sent by a terminal to the base station; or the base station module sends information to another module (for example, a radio frequency module or an antenna) in the base station, where the information is sent by the base station to a terminal. The base station module herein may be a baseband chip of the base station, or may be a DU or another module. The DU herein may be a DU in an open radio access network (open radio access network, O-RAN) architecture.

It may be understood that the processor in embodiments of this application may be a central processing unit (Central Processing Unit, CPU), another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor, any conventional processor, or the like.

The method steps in embodiments of this application may be implemented by hardware, or may be implemented by a processor executing software instructions. The software instruction may include a corresponding software module, the software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to a processor, so that the processor can read information from the storage medium and write information into the storage medium. Alternatively, the storage medium may be a component of the processor. The processor and the storage medium may be located in an ASIC. In addition, the ASIC may be located in a base station or a terminal. The processor and the storage medium may exist in the base station or the terminal as discrete components.

All or a part of the foregoing embodiments may be implemented by using software, hardware, firmware, or any combination thereof. When software is used for implementation, all or a part of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. An initial access method, performed by a terminal or a module in a terminal, and comprising:
performing detection on a first common channel, wherein the first common channel comprises a synchronization signal and a physical broadcast channel, the physical broadcast channel carries a part of minimum system information MSI of a cell, and the part of MSI indicates a transmission configuration of remaining minimum system information RMSI of the cell;
determining, based on the detected first common channel, a first reference signal RS set corresponding to the first common channel, wherein the first RS set comprises at least two RSs;
measuring the first RS set to determine a target RS in the first RS set; and
receiving, based on the target RS, a second common channel carrying the RMSI.

2. The method according to claim 1, wherein first indication information in the first common channel indicates the first RS set.

3. The method according to claim 1 or 2, wherein each RS in the first RS set occupies only one symbol in time domain; and/or different RSs in the first RS set occupy a same time domain symbol but different frequency domain positions.

4. The method according to any one of claims 1 to 3, wherein a time-frequency position of the RS in the first RS set is determined based on a time-frequency position of the first common channel; or a time-frequency position of the RS in the first RS set is indicated by the first common channel.

5. The method according to any one of claims 1 to 4, wherein the first common channel corresponds to one set of second common channels, and the set of second common channels comprises at least two second common channels.

6. The method according to claim 5, wherein the target RS corresponds to one target second common channel, the target second common channel is a second common channel in the set of second common channels, and a space domain filtering parameter used for receiving the target second common channel is the same as a space domain filtering parameter used for receiving the target RS.

7. The method according to any one of claims 1 to 6, wherein the first common channel corresponds to one set of third common channels, and the set of third common channels comprises at least two third common channels.

8. The method according to claim 7, wherein the target RS corresponds to one target third common channel, and the target third common channel is a third common channel in the set of third common channels; and
a space domain filtering parameter used for receiving the target third common channel is the same as a space domain filtering parameter used for receiving the target RS.

9. The method according to any one of claims 1 to 8, wherein the first common channel corresponds to one random access channel set, and the random access channel set comprises at least two random access channels.

10. The method according to claim 9, wherein the target RS corresponds to one target random access channel, and the target random access channel is a random access channel in the random access channel set; and
a space domain filtering parameter used for sending the target random access channel is the same as a space domain filtering parameter used for receiving the target RS.

11. An initial access method, performed by a network device or a module in a network device, and comprising:
sending a first common channel, wherein the first common channel comprises a synchronization signal and a physical broadcast channel, the physical broadcast channel carries a part of minimum system information MSI of a cell, and the part of MSI indicates a transmission configuration of remaining minimum system information RMSI of the cell;
sending an RS in a first reference signal RS set corresponding to the first common channel, wherein the first RS set comprises at least two RSs;
sending a second common channel carrying the RMSI; and
performing detection on a random access channel corresponding to the RS in the first RS set, wherein
a transmit beam of the RS in the first RS set is a refinement of a transmit beam of the first common channel; or transmit beams of all RSs in the first RS set fall within a range of a transmit beam of the first common channel; or a transmit beam of a part of RSs in the first RS set falls within a range of a transmit beam of the first common channel, and a transmit beam of a part of the RSs is out of the range of the transmit beam of the first common channel.

12. The method according to claim 11, wherein transmit beams of different RSs in the first RS set do not overlap or partially overlap.

13. The method according to claim 11 or 12, wherein first indication information in the first common channel indicates the first RS set.

14. The method according to any one of claims 11 to 13, wherein each RS in the first RS set occupies only one symbol in time domain; and/or the different RSs in the first RS set occupy a same time domain symbol but different frequency domain positions.

15. The method according to any one of claims 11 to 14, wherein a time-frequency position of the RS in the first RS set is determined based on a time-frequency position of the first common channel; or the first common channel indicates a time-frequency position of the RS in the first RS set.

16. The method according to any one of claims 11 to 15, wherein the first common channel corresponds to one set of second common channels, and the set of second common channels comprises at least two second common channels.

17. The method according to claim 16, wherein a target second common channel in the set of second common channels corresponds to one target RS in the first RS set, and a beam used for sending the target second common channel is the same as a beam used for sending the target RS.

18. The method according to any one of claims 11 to 17, wherein the first common channel corresponds to one set of third common channels, and the set of third common channels comprises at least two third common channels.

19. The method according to claim 18, wherein a target third common channel in the set of third common channels corresponds to one target RS in the first RS set, and a beam used for sending the target third common channel is the same as a beam used for sending the target RS.

20. The method according to any one of claims 11 to 19, wherein the first common channel corresponds to one random access channel set, and the random access channel set comprises at least two random access channels.

21. The method according to claim 20, wherein a target random access channel in the random access channel set corresponds to one target RS in the first RS set, and a receive beam used for receiving the target random access channel is the same as a transmit beam used for sending the target RS.

22. A communication apparatus, comprising a processor, wherein the processor is configured to perform the method according to any one of claims 1 to 10, or the processor is configured to perform the method according to any one of claims 11 to 21.

23. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 10 or the method according to any one of claims 11 to 21 by using a logic circuit or executing code instructions.

24. A computer-readable storage medium, storing computer instructions, wherein when the computer instructions are executed by a communication apparatus, the communication apparatus is enabled to perform the method according to any one of claims 1 to 10, or perform the method according to any one of claims 11 to 21.
